# EUROPÄISCHE PATENTSCHRIFT

(11) **EP 0 936 168 B1**
(45) Veröffentlichungstag und Bekanntmachung des Hinweises auf die Patenterteilung: **03.09.2003**
(21) Anmeldenummer: 99101987.8
(22) Anmeldetag: 01.02.1999
(51) Int. Cl.: B65H 27/00, B65H 31/30, B65H 29/20, B65G 47/26, B65H 5/00

(54) **Rollenförderer zum Fördern von Stapeln**
Roller conveyor for conveying stacks
Convoyeur à rouleaux pour acheminer des piles

(30) Priorität: 14.02.1998 DE 19806133
(43) Veröffentlichungstag der Anmeldung: 18.08.1999
(73) Patentinhaber: TOPACK Verpackungstechnik GmbH, 21493 Schwarzenbek (DE)
(72) Erfinder: Kiprowski, Carsten, 19306 Neustadt-Glewe (DE); Meishner, Henning, 38855 Wernigerode (DE)
(74) Vertreter: Herrmann, Günther

(56) Entgegenhaltungen:
- EP-A- 0 149 694
- EP-A- 0 336 258
- EP-A- 0 565 456
- GB-A- 1 428 172

## Beschreibung

Die Erfindung betrifft einen Rollenförderer (siehe z.B. EP-A-0 565 456) zum Fördern von aus einzelnen blattförmigen Gegenständen bestehenden Stapeln an einen Anschlag mittels Rollen oder Walzen , die auf zu Drehbewegungen angetriebenen Wellen frei drehen. Beim Fördern von Stapeln aus blattförmigen Gegenständen, z. B. aus Zuschnitten für Zigarettenpackungen, auf Rollenförderern (Rollenbahnen) der eingangs genannten Art tritt das Problem auf, daß die voreilenden Enden der flexiblen blattförmigen Gegenstände sich etwas nach unten abbiegen können, und dadurch die untersten Gegenstände gegen die hintereinander angeordneten Rollen oder Walzen des Rollenförderers leicht anstoßen. Dies hat manchmal zur Folge, daß sich die untersten Gegenstände etwas nach hinten verschieben und die Stapel an dem Anschlag nicht mehr genau ausgerichtet sind. In Packmaschinen, in denen Zigarettenblöcke mit den blattförmigen Gegenständen umhüllt werden, können solche Verschiebungen zu Problemen führen.

Die der Erfindung zugrundeliegende Aufgabe besteht darin, eine Verschiebung der untersten Gegenstände eines auf einem Rollenförderer geförderten Stapels zu vermeiden, so daß sich ein solcher Stapel sauber ausgerichtet an den Anschlag legt und so z. B. in eine Packmaschine abgefördert werden kann.

Die Lösung gemäß der Erfindung besteht darin, daß in einem Endbereich des Rollenförderers die von den Rollen oder Walzen auf die Stapel ausgeübten Förderkräfte erhöht sind.

Weiterbildungen und weitere Ausgestaltungen der Erfindung sind den untergeordneten Ansprüchen zu entnehmen.

Der mit der Erfindung verbundene Vorteil besteht darin, daß von dem Rollenförderer verursachte Verschiebungen der untersten Gegenstände eines Stapels am Anschlag wieder ausgeglichen werden.

Die Erfindung wird anhand von Ausführungsbeispielen näher erläutert

Es zeigen:
- Figur 1: schematisch einen Rollenförderer (Rollenbahn) für Blätterstapel nach dem Stand der Technik,
- Figur 2 bis 4: einen Rollenförderer gemäß der Erfindung für Blätterstapel unter Verwendung von Druckfedern,
- Figur 5: eine Seitenansicht einer gemäß der Erfindung ausgeführten Welle mit Rollen, die von einem pneumatischen Kraftelement gegen einen mit der Welle fest verbundenen Anschlag gedrückt werden,
- Figur 6: schematisch Rollen eines Rollenförderers gemäß der Erfindung mit Wellen unterschiedlicher Durchmesser zur Erzielung unterschiedlicher Förderkräfte,
- Figur 7: schematisch einen Rollenförderer gemäß der Erfindung mit einer Bremsvorrichtung für Rollen,
- Figur 8: schematisch einen Rollenförderer gemäß der Erfindung mit einer Hubvorrichtung für einen im Endbereich angekommenen Stapel,
- Figur 9: schematisch einen Rollenförderer, bei dem die Blätter der Stapel durch elektrostatische Ladungen gegeneinander fixiert sind.

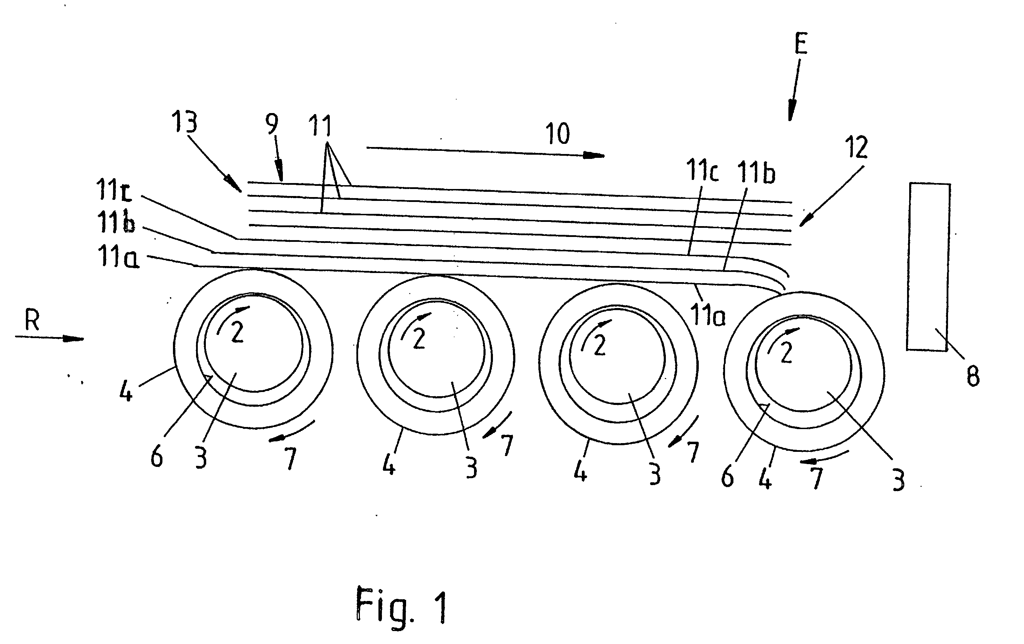

Figur 1 zeigt einen Rollenförderer R mit umlaufenden Drehkörpem in Form von Rollen 4, der mit konstantem Drehmoment entsprechend der Pfeile 2 angetriebene Wellen 3 aufweist, auf denen die Rollen 4 mit größerem Durchmesser frei drehbar aufliegen. Auf jeder der Wellen 3 sind in Richtung senkrecht zur Zeichenebene jeweils mehrere Rollen 4 angeordnet, die durch die Reibung zwischen ihren Innenflächen 6 und den Wellen 3 entsprechend den Pfeilen 7 mitgenommen werden, wobei sie die auf ihnen ruhenden Gegenstände, z. B. Stapel 9, die jeweils aus einzelnen Blättern 11 bestehen, in Richtung des Pfeils 10 zu einem in einem Endbereich E des Rollenförderers R angeordneten stationären Anschlag 8 fördern. Die Abstände zwischen den einzelnen Blättern 11, z. B. Umhüllungskomponenten für Zigarettenpackungen, sind übertrieben groß dargestellt. In der Realität liegen die Blätter dicht an dicht aufeinander.

Die vorlaufenden Enden 12 der untersten Blätter 11a ... 11c des Stapels 9 biegen sich etwas nach unten ab, so daß sie leicht gegen die Rollen 4 anstoßen; dies hat eine Verschiebung nach hinten zur Folge, wie die Darstellung der nachlaufenden Enden 13 bei den untersten Blättern 11a ... 11c zeigt. Dies bedeutet, daß der Stapel 9 am Anschlag vertikal nicht mehr exakt ausgerichtet ist, was die Weiterverarbeitung stören kann.

Anstelle von mehreren hintereinander angeordneten Rollen können auf den Wellen 3 auch Walzen angeordnet sein. Auf dem beschriebenen Rollen/Walzenförderer können mehrere Stapel 9 gefördert werden, die sich dann im Endbereich hintereinander stauen.

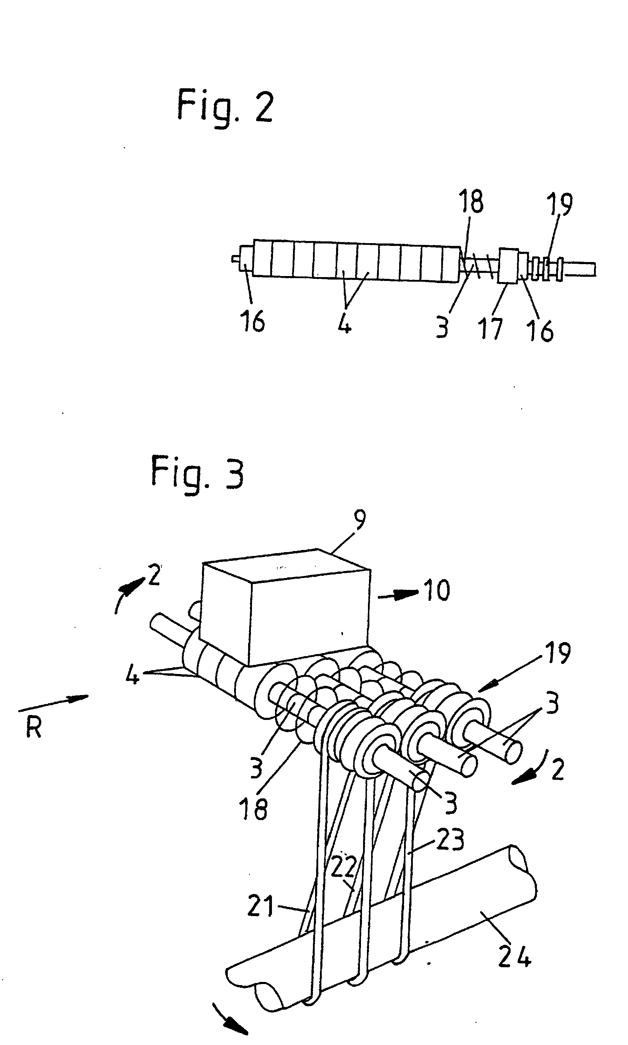

In den Figuren 2 bis 4 ist eine Weiterbildung des in Figur 1 dargestellten Prinzips gemäß der Erfindung beschrieben.

Figur 2 zeigt die auf einer zu einer Drehbewegung angetriebenen Welle 3 angeordneten Rollen 4 im Endbereich E eines Rollenförderers R gemäß Figur 1, also vor dem nicht dargestellten Anschlag (Position 8 in Figur 1). Auf der Welle 3 sind drehfest Klemmringe 16 befestigt, die also mit der Welle 3 drehen. An einen Klemmring 16 schließt sich eine Federabdeckrolle 17 an. Eine Druckfeder 18 stützt sich an der Rolle 17 und der äußersten Rolle 4 der Rollenreihe ab und erhöht über die Reibung an den Seitenflächen der Rollen die auf die untersten Blätter des Stapels aufgebrachte Förderkraft, die somit die nach hinten verschobenen Blätter (11a ... 11c in Figur 1) in Förderrichtung vorschieben, so daß der Stapel ausgerichtet an dem Anschlag zur Ruhe kommt und in dieser Formation abgenommen und weiterverarbeitet werden kann.

Zum in Figur 3 dargestellten Antrieb der Wellen 3 dienen Riemenscheiben 19. In Figur 3 sind nur die auf Wellen 3 laufenden Rollen 4, die Federn 18 und die Riemenscheiben 19 dargestellt, also nicht die Klemmringe 16 und nicht die Federabdeckrolle 17. Die Wellen 3 werden mit in den Nuten der Riemenscheiben 19 geführten Antriebsriemen 21 ... 23 angetrieben, die unter Spannung über eine zentrale Antriebswelle 24 geführt sind.

Außerdem können zwei Rollenförderer parallel nebeneinander angeordnet sein.

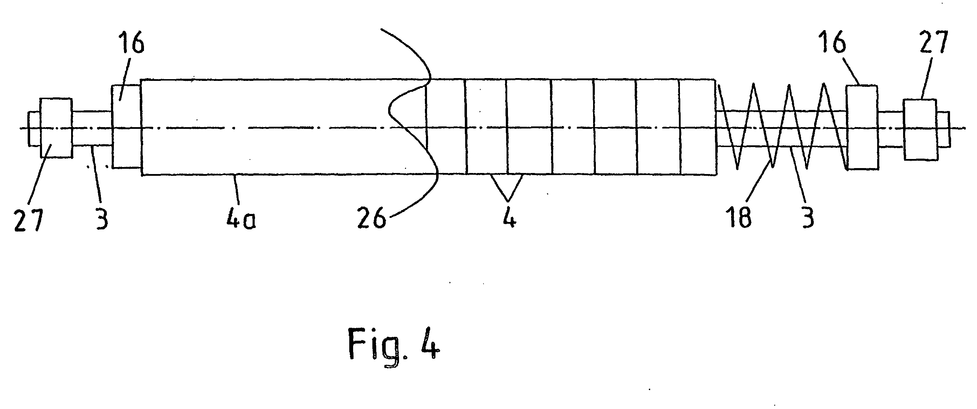

In Figur 4 ist noch einmal schematisch das Prinzip der Erfindung angedeutet. Links von der Trennlinie 26 ist statt Rollen 4 eine Walze 4a dargestellt. Mit 27 sind Lager bezeichnet.

Die Rollen 4 und die Walze 4a der Figuren 2 bis 4 haben im Endbereich eines Rollenförderers bevorzugt Oberflächen mit höherem Reibwert, z. B. gummierte Oberflächen.

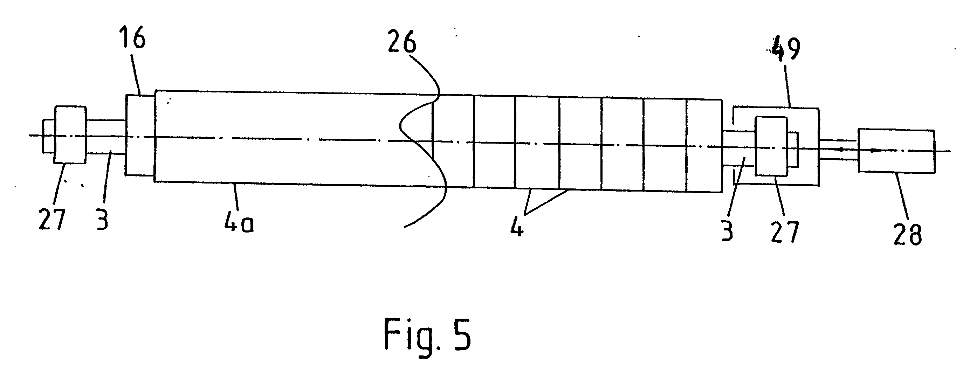

In Figur 5 wird die Feder ersetzt durch ein steuerbares Kraftelement in Form eines pneumatischen Zylinder-Kolben-Systems 28, mit dem Kräfte steuerbar auf ein Lagergehäuse 49 aufgebracht werden können, durch die die Rollen 4 (oder die Walze 4a) gegen den Klemmring 16 gepreßt werden, wodurch die Förderkräfte erhöht oder erniedrigt werden können.

Auch hier können Rollen oder Walzen im Endbereich des Rollenförderers Oberflächen mit erhöhten Reibwerten, z. B. aus Gummi, aufweisen.

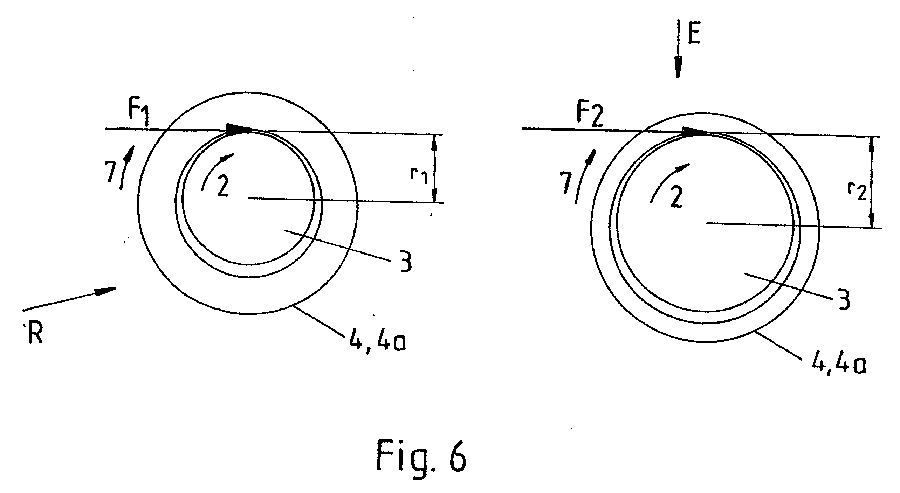

Figur 6 zeigt eine weitere Möglichkeit, die Förderkraft von Rollen oder Walzen in einem bestimmten Bereich, im vorliegenden Fall im Endbereich eines Rollenförderers, zu erhöhen. Hierzu wird der Radius r2 der Rollen 4 oder Walzen 4a im Endbereich erhöht, wodurch sich die Förderkraft F2 gegenüber der Förderkraft F1 von Rollen oder Walzen mit geringerem Radius r1 erhöht. Auch hierdurch können mit den erhöhten Förderkräften im Endbereich E eines Rollenförderers R die zurückgebliebenen unteren Blätter eines in der Figur nicht dargestellten Stapels vorgeschoben werden, z. B. an einen Anschlag.

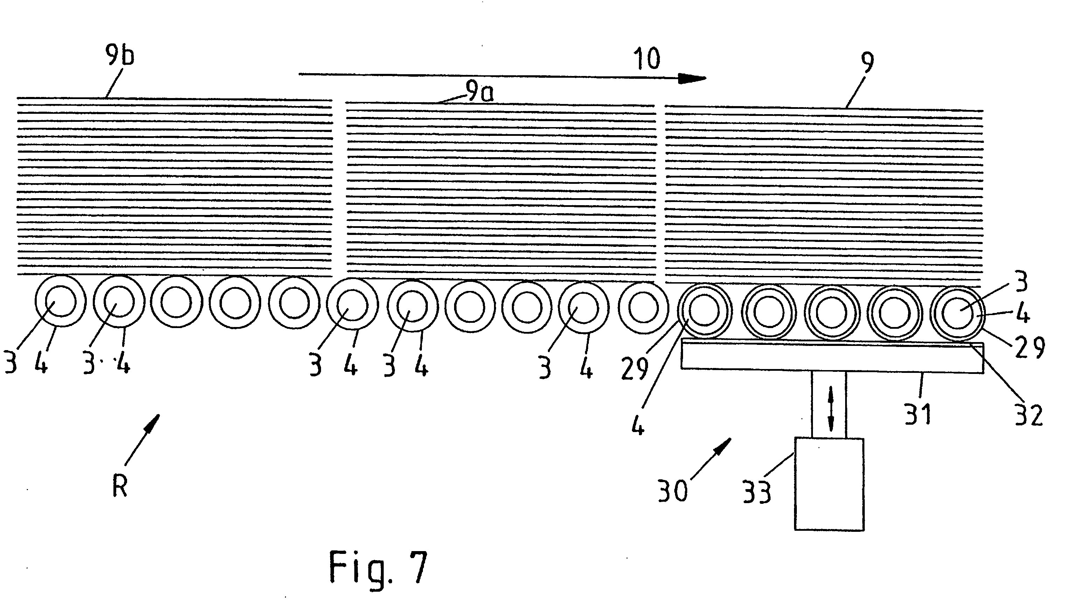

Figur 7 zeigt eine Bremsanordnung 30 für einen Stapel 9, z. B. aus Packungszuschnitten für Zigaretten oder dgl. Ein von den Rollen 4 auf den Wellen 3 in Richtung des Pfeils 10 herangeförderter Stapel 9 kann mittels einer gesteuert heb- und senkbaren mit einer gummierten Schicht 32 versehenen Bremsplatte 31 abgebremst werden. Hierzu hebt ein pneumatisches Zylinder-Kolben-System 33 die Bremsplatte 31 an, deren gummierte Schicht gegen die Rollen 4 drückt, die ebenfalls eine gummierte Oberfläche 29 aufweisen. Hierdurch werden die Rollen abgebremst und können auch durch weitere in Förderrichtung 10 herangeförderte Stapel 9a, 9b nicht verschoben werden.

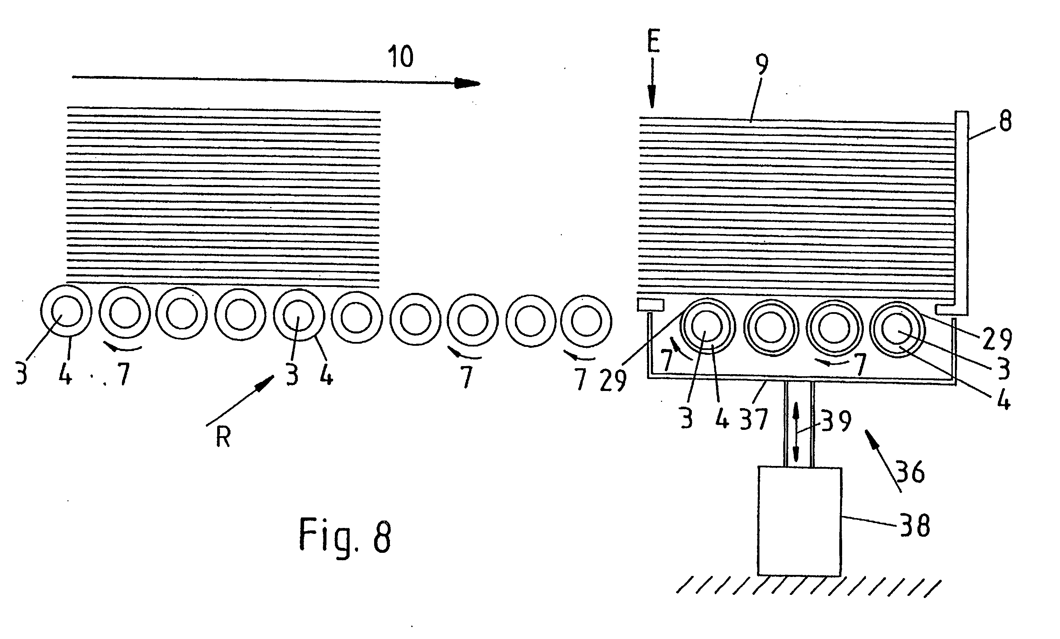

Figur 8 zeigt eine steuerbare Abhebevorrichtung 36, von der ein an einen Anschlag 8 in dem Endbereich E des Rollenförderers R angelangter Stapel 9 von dem Rollenförderer R abgehoben werden kann, damit der Stapel von den mit Oberflächen erhöhter Reibung, z. B. mit Gummischichten 29, versehenen Oberfläche der Rollen 4 freikommt. Die Abhebevorrichtung 36 weist einen Hubkasten 37 auf, der von einem pneumatischen Zylinder-Kolben-System 38 in Richtung des Doppelpfeils 39 heb- oder senkbar ist.

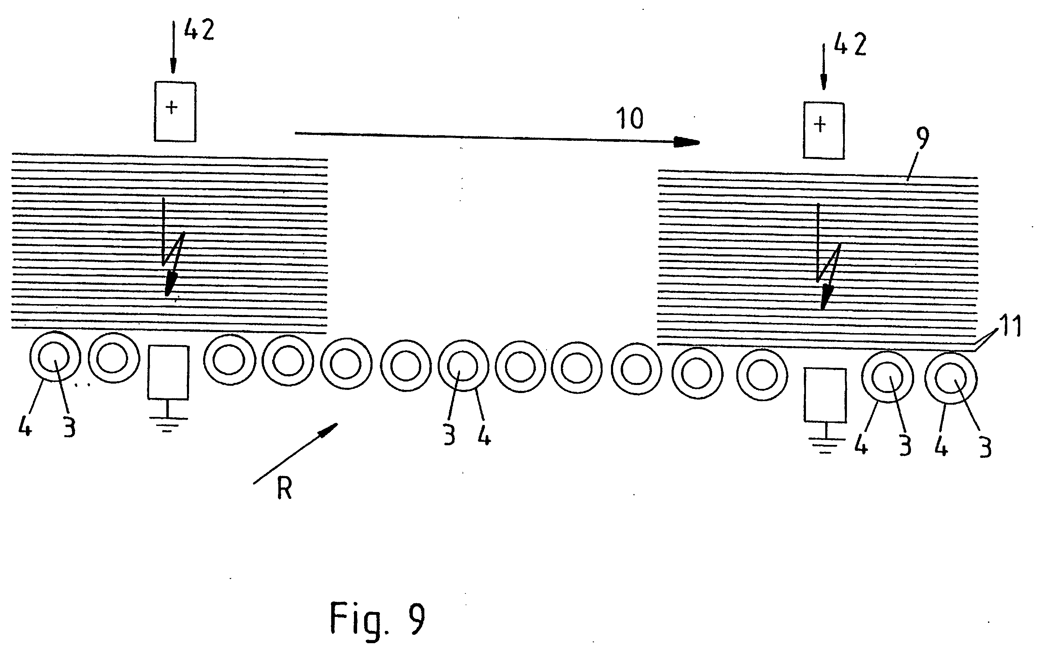

Figur 9 zeigt einen Rollenförderer R mit Ladestationen 42 zum Abgeben positiver elektrostatischer Ladungen an die Stapel 9. Deren Blätter aus Verpackungsmaterial für Zigarettenpackungen werden durch die Ladungen gegenseitig fixiert, wodurch die Neigung der Blätter zu relativen Verschiebungen abnimmt. Nach Beendigung der Förderung auf dem Rollenförderer R können die elektrostatischen Ladungen von den Stapeln entfernt werden. Eine entsprechende Vorrichtung zum Zuführen statischer Elektrizität wird von der Fa. HAUG GmbH KG, Friedrich-List-Straße 18, D-70771 Leinf.-Echterdingen (bei Stuttgart) unter der Typenbezeichnung HAUG Tristat TR 25 vertrieben.

## Patentansprüche

1. Rollenförderer (R) zum Fördern von aus einzelnen blattförmigen Gegenständen (11) bestehenden Stapeln (9) an einen Anschlag (8) mittels Rollen (4) oder Walzen (4a), die auf zu Drehbewegungen angetriebenen Wellen (3) frei drehen, **dadurch gekennzeichnet, daß** in einem Endbereich (E) des Rollenförderers (R) von den Rollen (4) oder Walzen (4a) auf die Stapel (9) ausgeübten Förderkräfte erhöht sind.

2. Rollenförderer nach Anspruch 1, **dadurch gekennzeichnet, daß** die Wellen (3) mit konstanten Drehmomenten antreibbar sind.

3. Rollenförderer nach Anspruch 1 und/oder 2, **dadurch gekennzeichnet, daß** die Wellen-Durchmesser in dem Endbereich (E) vergrößert sind.

4. Rollenförderer nach einem oder mehreren der vorhergehenden Ansprüche, **dadurch gekennzeichnet, daß** im Endbereich (E) auf die Rollen (4) oder Walzen (4a) stirnseitig eine Kraft ausgeübt wird, die sie an einen mit der Welle (3) verbundenen Klemmring (16) drückt.

5. Rollenförderer nach Anspruch 4, **dadurch gekennzeichnet, daß** Federn (18) zur stirnseitigen Belastung der Rollen in dem Endbereich (E) vorgesehen sind.

6. Rollenförderer nach Anspruch 4, **dadurch gekennzeichnet, daß** ein Kraftelement, vorzugsweise ein pneumatisches Zylinder-Kolben-System (28), zum stimseitigen Belasten der Rollen in dem Endbereich (E) vorgesehen ist.

7. Rollenförderer nach einem oder mehreren der vorhergehenden Ansprüche, **dadurch gekennzeichnet, daß** das Material der Oberflächen (29) der Rollen (4) oder Walzen (4a) in dem Endbereich einen erhöhten Reibungskoeffizienten aufweist.

8. Rollenförderer nach einem oder mehreren der vorhergehenden Ansprüche, **dadurch gekennzeichnet, daß** in dem Endbereich (E) eine steuerbare Rollenbremse (30) vorgesehen ist

9. Rollenförderer nach Anspruch 8, **dadurch gekennzeichnet, daß** die Rollenbremse (30) als gesteuert an die Rolle andrückbare Bremsplatte (31) mit erhöhtem Reibungskoeffizienten, vorzugsweise mit gummierter Oberfläche (32), ausgebildet ist

10. Rollenförderer nach einem oder mehreren der vorhergehenden Ansprüche, **dadurch gekennzeichnet, daß** in dem Endbereich (E) eine steuerbare Abhebevorrichtung (36) für die Stapel (9) vorgesehen ist.

11. Rollenförderer nach einem oder mehreren der vorhergehenden Ansprüche, **dadurch gekennzeichnet, daß** zur Verbesserung des Aneinanderhaftens der Gegenstände (11) eines Stapels (9) während der Förderung Anordnungen (42) zum Aufbringen elektrostatischer Ladungen vorgesehen sind.

12. Rollenförderer nach einem oder mehreren der vorhergehenden Ansprüche, **dadurch gekennzeichnet, daß** die Gegenstände des Stapels Zuschnitte von Umhüllungsmaterial für Zigarettenpackungen sind.

## Claims

1. A roller conveyor **(R)** for conveying stacks (9) comprising individual articles (11) in the form of sheets to a stop (8) by means of rollers (4) or rolls (4a) which revolve freely on shafts (3) driven in a rotating manner, **characterized in that** in one end region (**E**) of the roller conveyor **(R)** conveying forces exerted upon the stacks (9) are increased by the rollers (4) or rolls (4a).

2. A roller conveyor according to Claim 1, **characterized in that** the shafts (3) can be driven at constant torques.

3. A roller conveyor according to Claim 1 and/or 2, **characterized in that** the diameters of the shafts are increased in the end region **(E)**.

4. A roller conveyor according to one or more of the preceding Claims, **characterized in that** in the end region (**E**) the front ends of the rollers (4) or rolls (4a) have a force exerted upon them which presses them against a clamping ring (16) connected to the shaft (3).

5. A roller conveyor according to Claim 4, **characterized in that** springs (18) are provided for acting upon the front ends of the rollers in the end region (**E**).

6. A roller conveyor according to Claim 4, **characterized in that** a power element, preferably a pneumatic cylinder-piston system (28), is provided for acting upon the front ends of the rollers in the end region (**E**).

7. A roller conveyor according to one or more of the preceding Claims, **characterized in that** the material of the surfaces (29) of the rollers (4) or rolls (4a) in the end region has an increased coefficient of friction.

8. A roller conveyor according to one or more of the preceding Claims, **characterized in that** a controllable roller brake (30) is provided in the end region (**E**).

9. A roller conveyor according to Claim 8, **characterized in that** the roller brake (30) is constructed in the form of a brake plate (31) which can be pressed against the roller in a controlled manner and with an increased coefficient of friction, and preferably with a rubberized surface (32).

10. A roller conveyor according to one or more of the preceding Claims, **characterized in that** a controllable lifting device (36) for the stack (9) is provided in the end region **(E)**.

11. A roller conveyor according to one or more of the preceding Claims, **characterized in that,** in order to improve the mutual adhesion of the articles (11) of a stack (9) during the conveying, devices (42) for applying electrostatic charges are provided.

12. A roller conveyor according to one or more of the preceding Claims, **characterized in that** the articles of the stack are blanks of wrapping material for cigarette packets.

## Revendications

1. Transporteur à galets (R) destiné à faire avancer des empilages (9) constitués d'objets séparés en forme de feuille (11), jusqu'au contact d'une butée (8), au moyen de galets (4) ou de rouleaux (4a), qui tournent librement sur des arbres (3) entraînés suivant des mouvements de rotation, **caractérisé en ce que** dans une région terminale (E) du transporteur à galets (R), des forces d'avancement exercées sur les empilages (9) par les galets (4) ou les rouleaux (4a), sont augmentées.

2. Transporteur à galets selon la revendication 1, **caractérisé en ce que** les arbres (3) peuvent être entraînés sous des couples de rotation constants.

3. Transporteur à galets selon la revendication 1 et/ou 2, **caractérisé en ce que** les diamètres des arbres sont agrandis dans la région terminale (E).

4. Transporteur à galets selon une ou plusieurs des revendications précédentes, **caractérisé en ce que** dans la région terminale (E), il est exercé sur les galets (4) ou les rouleaux (4a), contre leur face d'extrémité, une force qui les repousse contre une bague de serrage (16) reliée à l'arbre (3).

5. Transporteur à galets selon la revendication 4, **caractérisé en ce que** des ressorts (18) sont prévus pour charger les galets, sur leur face d'extrémité, dans la région terminale (E).

6. Transporteur à galets selon la revendication 4, **caractérisé en ce qu'**un organe applicateur de force, de préférence un système pneumatique à cylindre et piston (28), est prévu pour charger les galets, sur leur face d'extrémité, dans la région terminale (E).

7. Transporteur à galets selon une ou plusieurs des revendications précédentes, **caractérisé en ce que** le matériau de la surface libre (29) des galets (4) ou des rouleaux (4a) présente un coefficient de frottement plus élevé dans la région terminale.

8. Transporteur à galets selon une ou plusieurs des revendications précédentes, **caractérisé en ce que** dans la région terminale (E), il est prévu un frein à galet (30) à commande régulable.

9. Transporteur à galets selon la revendication 8, **caractérisé en ce que** le frein à galet (30) est conçu sous forme d'une plaque de freinage (31) à coefficient de frottement élevé, de préférence à surface libre caoutchoutée (32), qui peut être pressée contre le galet sous commande régulable.

10. Transporteur à galets selon une ou plusieurs des revendications précédentes, **caractérisé en ce que** dans la région terminale (E), il est prévu un dispositif élévateur (36), à commande régulable, pour les empilages (9).

11. Transporteur à galets selon une ou plusieurs des revendications précédentes, **caractérisé en ce que** des moyens (42) sont prévus pour l'application de charges électrostatiques en vue de l'amélioration de l'adhérence mutuelle des objets (11) d'un empilage (9) pendant qu'il est avancé.

12. Transporteur à galets selon une ou plusieurs des revendications précédentes, **caractérisé en ce que** les objets de l'empilage sont des flans de matériau d'enveloppement pour des paquets de cigarettes.
